# EUROPÄISCHE PATENTSCHRIFT

(11) **EP 1 269 766 B1**
(45) Veröffentlichungstag und Bekanntmachung des Hinweises auf die Patenterteilung: **10.08.2005**
(21) Anmeldenummer: 01933588.4
(22) Anmeldetag: 05.04.2001
(51) Int. Cl.: H04Q 3/00, H04L 12/64, H04M 7/00

(54) **BEREITSTELLEN VON ERGÄNZENDEN DIENSTEN IN EINEM PAKETVERMITTELNDEN KOMMUNIKATIONSNETZ**
PROVISION OF SUPPLEMENTARY SERVICES IN A PACKET-SWITCHING COMMUNICATIONS NETWORK
SYSTEME DE TELECOMMUNICATION DOTE D'UN RESEAU DE COMMUNICATION A COMMUTATION DE PAQUETS ET PROCEDE PERMETTANT DE FAIRE FONCTIONNER UN TEL SYSTEME

(30) Priorität: 06.04.2000 DE 10017224
(43) Veröffentlichungstag der Anmeldung: 02.01.2003
(73) Patentinhaber: SIEMENS AKTIENGESELLSCHAFT, 80333 München (DE)
(72) Erfinder: BRUMM, Thomas, 82131 Gauting-Königswiesen (DE); KLEINER, Patrick, 81476 München (DE); KLOTZ, Udo, 82061 Neuried (DE); KRESNIK, Robert, 2310 Slovenska Bistrica (SI); LÖBIG, Norbert, 64291 Darmstadt (DE); ROMANSKI, Irena, 82544 Egling (DE); ZINKL, Walter, A-1100 Wien (AT)
(86) Internationale Anmeldenummer: PCT/DE2001/001361
(87) Internationale Veröffentlichungsnummer: WO 2001/078418

(56) Entgegenhaltungen:
- EP-A- 0 966 145
- DALGIC I ET AL: "COMPARISON OF H.323 AND SIP FOR IP TELEPHONY SIGNALING" PROCEEDINGS OF THE SPIE CONFERENCE ON MULTIMEDIA SYSTEMS AND APPLICATIONS, Bd. 3845, September 1999 (1999-09), Seiten 106-122, XP000949839
- KORPI M ET AL: "SUPPLEMENTARY SERVICES IN THE H.323 IP TELEPHONY NETWORK" IEEE COMMUNICATIONS MAGAZINE, Bd. 37, Nr. 7, Juli 1999 (1999-07), Seiten 118-125, XP000835313 ISSN: 0163-6804
- ITU-T RECOMMENDATION H.450.1 - GENERIC FUNCTIONAL PROTOCOL FOR THE SUPPORT OF SUPPLEMENTARY SERVICES IN H.323, Februar 1998 (1998-02), Seiten 1-21, XP002177452
- ITU-T RECOMMENDATION H.323 - PACKET-BASED MULTIMEDIA COMMUNICATIONS SYSTEMS, September 1999 (1999-09), Seiten 1-129, XP002166480

## Beschreibung

Die Erfindung betrifft ein Telekommunikationssystem mit einem paketvermittelnden Kommunikationsnetz, bei dem mindestens ein erster Teilnehmer mit einem paketvermittelnden Kommunikationsnetz verbunden ist. Die Erfindung betrifft weiterhin ein Verfahren zum Betreiben eines solchen Telekommunikationssystems.

Es gibt verschiedene Arten von Kommunikationsnetzen, um Sprache, Videodaten und weitere Daten zu übertragen. Durch die verschiedenen Einsatzmöglichkeiten dieser Kommunikationsnetze wurden unterschiedliche Dienste und Leistungsmerkmale für jedes dieser Kommunikationsnetze entwickelt. Konventionelle Kommunikationsnetze zur Sprachübertragung sind im allgemeinen leitungsvermittelnde Kommunikationsnetze und Kommunikationsnetze zur Übertragung von anderen Daten sind üblicherweise paketvermittelnde Kommunikationsnetze, wie z.B. ein lokales Computernetzwerk (Local-Area-Network; LAN) oder das Internet. Jedoch können derzeit Sprach-, Daten- und Videodienste von beiden Kommunikationsnetzarten bereitgestellt werden. So ist es z.B. möglich, einen Teilnehmer über ein paketvermittelndes Kommunikationsnetz mit dem leitungsvermittelnden Kommunikationsnetz zu verbinden. Ergänzende Dienste (Supplementary Services), wie z.B. Rufübernahme, Dreierkonferenz, große Konferenz, Halten, Anzeige von Gebühreninformationen, geschlossene Benutzergruppe, Rufnummernidentifikation, automatischer Rückruf bei besetzt, automatischer Rückruf bei keiner Antwort, Rufsperren, Indikation von wartenden Nachrichten und Anrufweiterleitungen, die in bekannten leitungsvermittelnden Kommunikationsnetzen bereitgestellt werden, können teilweise auch in paketvermittelnden Kommunikationsnetzen genutzt werden. Dazu sind Standards, z.B. in der H.323 basierenden Serie von Empfehlungen der International Telecommunication Union - Telecommunications Standardisation Sector (ITU-T Empfehlung) für paketvermittelnde Kommunikationsnetze definiert. Zu diesen Standards gehören insbesondere die Standards H.323, H.225 und H.450.

Es ist weiterhin eine H.323-Architektur für ergänzende Dienste bekannt, bei der eine Möglichkeit des Zusammenwirkens der Dienste zwischen leitungsvermittelnden und paketvermittelnden Kommunikationsnetzen besteht. So ist z.B. bekannt, dass nutzkanalbezogene Signalisierungsnachrichten zur Aktivierung, Deaktivierung, Anforderung und Steuerung von Diensten und Leistungsmerkmalen im leitungsvermittelnden Kommunikationsnetz auf Signalisierungspakete abgebildet werden, die im paketvermittelnden Kommunikationsnetz verwendet werden. Vorzugsweise werden im leitungsvermittelnden Kommunikationsnetz sogenannte DSS1-Nachrichten genutzt, die in den ITU-Standards Q.931 und Q.932 definiert sind. Im paketvermittelnden Kommunikationsnetz, insbesondere im Internet, wird zum Übertragen der Signalisierungspakete vorzugsweise das standardisierte H.225-Signalisierungsprotokoll verwendet. Dienst- und Leistungsmerkmale, zu deren Nutzung nutzkanalbezogene Signalisierungsnachrichten benötigt werden, sind z.B. Rufübernahme, Dreier- und große Konferenz, Halten, Anzeigen von Gebühreninformationen, geschlossene Benutzergruppe und die Rufnummernidentifikationsdienste. Für Statusabfragen sowie zur Aktivierung bzw. Deaktivierung von Dienstmerkmalen, wie z.B. Rufumleitung, automatischer Rückruf bei besetzt, automatischer Rückruf bei keiner Antwort, und bei der Indikation von wartenden Nachrichten ist eine nutzverbindungsunabhängige bzw. nutzkanalunabhängige Signalisierung erforderlich.

Zur Sprachübertragung gemäß dem H.323-Standard sind Komponenten, wie z.B. Terminals, Gateway und Gatekeeper vorgesehen und definiert. Terminals sind Endgeräte, die mit dem paketvermittelnden Kommunikationsnetz verbunden sind. Bei paketvermittelnden Kommunikationsnetzen ist es nötig, dass der Teilnehmer sich mit seinem Endgerät anmeldet bzw. einlogged. Ein Gateway dient als Schnittstelle zur Umsetzung der Datenprotokolle zwischen paketvermittelndem Kommunikationsnetz und leitungsvermittelndem Kommunikationsnetz. Ein Gatekeeper dient zur Verwaltung und Kontrolle von Benutzerdiensten und Netzkapazitäten eines paketvermittelnden Kommunikationsnetzes gemäß dem H.323-Standard. Im Gatekeeper erfolgt auch die Adressierung eines ankommenden Anrufes im paketvermittelnden Kommunikationsnetz. Jeder Teilnehmer hat im paketvermittelnden Kommunikationsnetz eine Adresse. Die von einem rufenden Teilnehmer gewählte Telefonnummer wird vom Gatekeeper auf die Adresse des gerufenen Teilnehmers im paketvermittelnden Kommunikationsnetz umgesetzt. Somit können mit dem H.323-Standard Telefonanrufe im Internet bzw. in auf einem Internetprotokoll basierenden Netzen übertragen werden.

Große paketvermittelnde Netzwerke bieten die Möglichkeit, dass mehrere Mitarbeiter, die nicht, bzw. nicht immer im gleichen Büro arbeiten, mit Hilfe des Netzwerkes gemeinsame Funktionen nutzen können. Dies ist insbesondere dann sinnvoll, wenn Mitarbeiter viel unterwegs sind oder die Mitarbeiter als Teleworker zu Hause arbeiten. Diese Mitarbeiter sind dann an einem externen Datennetz, z.B. dem Internet, angeschlossen. Über dieses Internet haben diese Mitarbeiter einen Zugang zu einem internen Datennetz der Firma, z.B. einem Intranet, sowie zu einem Telekommunikationsnetz der Firma, z.B. zum Sprachnetz. Mitarbeiter, die z.B. für eine Abteilung oder an einem Projekt arbeiten, werden insbesondere zur besseren Erreichbarkeit zu Gruppen, sogenannten CENTREX-Gruppen zusammengefasst. CENTREX ist ein spezieller Dienst, der mit Hilfe eines Netzknotens eines Telekommunikationsnetzes bereitgestellt wird. Mit Hilfe von CENTREX kann einem Teil der angeschlossenen Teilnehmer, z.B. den Mitarbeitern der Abteilung oder des Projektes eine Funktionalität angeboten werden, die in etwa der Funktionalität einer Nebenstellenanlage entspricht, obwohl sie nicht alle an der gleichen Nebenstellenanlage angeschlossen sind. Mit Hilfe des CENTREX-Dienstes kann z.B. ein ankommender Ruf für einen Mitarbeiter der Gruppe für andere, voreingestellte Teilnehmer ebenfalls sichtbar und zugänglich gemacht werden. So gibt es beim CENTREX-Dienst weiterhin die Möglichkeit, einen Teamruf oder eine Anrufübernahme voreinzustellen. Dabei wird bei ankommenden Anruf zu einem Teilnehmeranschluss der Gruppe eine Meldung generiert, die an die weiteren in dieser Gruppe voreingestellten Teilnehmeranschlüsse übermittelt wird. Jeder Teilnehmer der Gruppe kann dann diesen Anruf übernehmen. Auch kann jeder der Teilnehmer der Gruppe im System geparkte Anrufe übernehmen. Die Teilnehmer der CENTREX-Gruppe können auch einen gemeinsamen Rufnummernplan haben, der von allen Teilnehmeranschlüssen genutzt werden kann. Jedoch ist beim Stand der Technik das Nutzen des CENTREX-Dienstes und anderer bei Sprachverbindungen bekannten Diensten, wie Dreierkonferenz, Anrufweiterleitung, Anrufwiedergabe, Aufschalten, Ansagedienste und privater Rufnummernplan nur im leitungsvermittelnden Kommunikationsnetz möglich. Gemäß den H.323/H.450-Standards werden diese Dienste für Sprachverbindungen mit Hilfe des paketvermittelnden Kommunikationsnetzes nicht, bzw. nicht in gleichem Umfang unterstützt.

In der europäischen Patentanmeldung EP 0,966,145 ist ein System offenbart, bei dem in einem leitungsvermittelnden Kommunikationsnetz (Circuit Network) erste Signalisierungsinformationen übertragen werden, die gemäß einem Signalisierungsstandard des leitungsvermittelnden Kommunikationsnetzes (Trunk Signaling) ausgebildet sind und in einem paketvermittelnden Kommunikationsnetz (IP Network) zweite Signalisierungsinformationen, die gemäß einem Signalisierungsstandard des paketvermittelnden Kommunikationsnetzes (H.323 Signaling) ausgebildet sind. Zwischen den beiden Netzen ist eine Schnittstelleneinheit (MMCS Gateway) zur Konvertierung zwischen den beiden Signalisierungsinformationen angeordnet.

In der Druckschrift Dalgic, Fang: "Comparison of H.323 and SIP for IP telephony signaling", Proceedings of the SPIE conference on multimedia systems and applications, Bd. 3845, September 1999, Seiten 106-122, XP-000949839 ist sind zwei Signalisierungsstandards eines als IP Netz ausgebildeten paketvermittelnden Kommunikationsnetzes dargestellt und miteinander verglichen.

In der ITU-T Recommendation H.450.1 (02/98), "Generic functionals protocol for the support of supplementary services in H.323", Februar 1998, Seiten 1-21, XP-002177452 ist ein weiterer Signalisierungsstandard des als IP Netz ausgebildeten paketvermittelnden Kommunikationsnetzes offenbart.

Aufgabe der Erfindung ist es, ein Telekommunikationssystem mit einem paketvermittelnden Kommunikationsnetz sowie ein Verfahren zum Betreiben eines solchen Telekommunikationssystems anzugeben, das einem Teilnehmer des paketvermittelnden Kommunikationsnetzes Dienst- und Leistungsmerkmale eines leitungsvermittelnden Kommunikationsnetzes zur Verfügung stellt.

Die Aufgabe wird für ein Telekommunikationssystem durch die Merkmale des Patentanspruchs 1 gelöst. Für ein Verfahren zum Betreiben eines solchen Telekommunikationssystems wird die Aufgabe durch die Merkmale des Patentanspruchs 19 gelöst. Vorteilhafte Weiterbildungen sind in den abhängigen Ansprüchen angegeben.

Durch ein Telekommunikationssystem mit den Merkmalen des Patentanspruchs 1 können die Signalisierungsinformationen des Netzelementes des leitungsvermittelnden Kommunikationsnetzes zum ersten Teilnehmer des paketvermittelnden Kommunikationsnetzes übertragen werden. Dadurch wird erreicht, dass diesem Teilnehmer kostengünstig Dienste und Leistungsmerkmale, z.B. vom ISDN bekannte Dienste und Leistungsmerkmale des Fernmeldenetzes, bereitgestellt werden können. Das Netzelement ist z.B. eine konventionelle Vermittlungsstelle, die mit der Schnittstelleneinheit verbunden ist. Das Netzelement verwaltet den Teilnehmer und führt die Teilnehmersignalisierung zum Verbindungsaufbau und zum Bereitstellen von Diensten und Leistungsmerkmalen für den ersten Teilnehmer durch. Dies erfolgt in gleicher Weise wie für konventionelle Teilnehmer, die an ein herkömmliches Netzelement angeschlossen sind.

Die von der Schnittstelleneinheit zum paketvermittelnden Kommunikationsnetz weitergeleiteten Signalisierungsinformationen werden mit Hilfe des paketvermittelnden Kommunikationsnetzes zwischen der Schnittstelleneinheit und dem ersten Teilnehmer übertragen. Somit werden dem ersten Teilnehmer die Signalisierungsinformationen des Netzelementes direkt zugeführt. So können Signalisierungsinformationen zwischen dem Netzelement und dem ersten Teilnehmer ausgetauscht werden, ohne durch die Signalisierungsmöglichkeiten des paketvermittelnden Kommunikationsnetzes in der Teilnehmersignalisierung des ersten Teilnehmers beschränkt zu sein. Somit lassen sich auch Dienste und Leistungsmerkmale für den ersten Teilnehmer durch das Netzelement bereitstellen, die anderen Teilnehmern, deren Teilnehmersignalisierung nur mit den Signalisierungsmöglichkeiten des paketvermittelnden Kommunikationsnetzes erfolgt, nicht zur Verfügung stehen. Dem ersten Teilnehmer können somit alle herkömmlichen Dienste und Leistungsmerkmale eines Fernmeldenetzes, z.B. alle ISDN-Dienste und Leistungsmerkmale, zur Verfügung gestellt werden. Dadurch muss der erste Teilnehmer nicht auf Kommunikationsfunktionen und Kommunikationsqualität verzichten, die Teilnehmern herkömmlicher Fernmeldenetze zur Verfügung stehen.

Bei einer Weiterbildung der Erfindung entsprechen die ersten Signalisierungsinformationen einem DSS1-Signalisierungsprotokoll. Mit Hilfe des DSS1-Signalisierungsprotokolls kann ein verbreitetes und zuverlässiges Signalisierungsprotokoll auch zur Teilnehmersignalisierung des ersten Teilnehmers in dem paketvermittelnden Kommunikationsnetz genutzt werden.

Bei einer anderen Weiterbildung der Erfindung wird ein Teil der ersten Signalisierungsinformationen mit Hilfe der Schnittstelleneinheit in zweite Signalisierungsinformationen konvertiert und als zweite Signalisierungsinformationen zwischen der Schnittstelleneinheit und dem ersten Teilnehmer übertragen. Dadurch wird erreicht, dass die Signalisierungsinformationen des Netzelementes, die in Signalisierungsinformationen des paketvermittelnden Kommunikationsnetzes konvertiert werden können, d.h. für die es entsprechende äquivalente Signalisierungsinformationen im paketvermittelnden Kommunikationsnetz gibt, auch mit Hilfe des Signalisierungssystems des paketvermittelnden Kommunikationsnetzes übertragen werden bzw. dass mit Hilfe dieser Signalisierungsinformationen die Teilnehmersignalisierung mit Mitteln des Paketnetzes erfolgt.

Vorteilhaft ist es dabei, wenn die zweiten Signalisierungsfunktionen einem H.323/H.450-Signalisierungsprotokoll entsprechen. Dadurch wird erreicht, dass ein bewährtes Signalisierungsprotokoll des paketvermittelnden Kommunikationsnetzes für Sprach- und Telekommunikationsverbindungen genutzt wird. Es ist dadurch weiterhin möglich, dem ersten Teilnehmer Dienste und Leistungsmerkmale, z.B. zum Aufbau einer Sprachverbindung zu einem zweiten Teilnehmer des paketvermittelnden Kommunikationsnetzes, durch das Signalisierungssystem des paketvermittelnden Kommunikationsnetzes bereitzustellen.

Bei einer anderen Weiterbildung entsprechen die zweiten Signalisierungsinformationen einem SIP-Signalisierungsprotokoll. Das SIP-Signalisierungsprotokoll ist ebenso wie das H.323/H.450-Signalisierungsprotokoll ein in Paketnetzen verbreitetes Signalisierungsprotokoll zur Teilnehmersignalisierung und zur Bereitstellung von Diensten und Leistungsmerkmalen für Teilnehmer von paketvermittelnden Kommunikationsnetzen. Somit kann mit Hilfe des Netzelementes auch eine Teilnehmersignalisierung des ersten Teilnehmers durchgeführt werden, wenn dieser Teilnehmer in einem paketvermittelnden Kommunikationsnetz mit einem SIP-Signalisierungsprotokoll verbunden ist.

Bei einer vorteilhaften Ausführungsform der Erfindung werden die zweiten Signalisierungsinformationen mit Hilfe von Signalisierungspaketen des paketvermittelnden Kommunikationsnetzes übertragen. Die ersten Signalisierungsinformationen werden mit Hilfe eines Datenbereichs dieser Signalisierungspakete übertragen, der keine zweiten Signalisierungsinformationen enthält. Dadurch wird erreicht, dass die ersten Signalisierungsinformationen mit Hilfe von vorhandenen Übertragungsmitteln des paketvermittelnden Kommunikationsnetzes übertragen werden, ohne zusätzliche Übertragungskapazität im paketvermittelnden Kommunikationsnetz zu benötigen. Weiterhin muss zur Verarbeitung der Signalisierungsinformationen nur eine Art von Signalisierungspaketen ausgewertet und verarbeitet werden.

Gemäß einer anderen Weiterbildung wird dem ersten Teilnehmer mit Hilfe der ersten Signalisierungsinformationen mindestens ein Dienst- und/oder Leistungsmerkmal zur Nutzung bereitgestellt, das nicht mit Hilfe der zweiten Signalisierungsinformationen nutzbar ist. Das Dienst- und/oder Leistungsmerkmal umfasst dabei z.B. eine Rufübernahme, eine Rufumleitung, eine Rufweiterleitung, eine Rufnamenanzeige, eine Teilnehmeraufschaltung, ein teilnehmerabhängiges Läuten, eine Dreierkonferenz, eine große Konferenz, ein Halten, eine Anzeige von Gebühreninformationen, eine geschlossene Benutzergruppe, einen privaten Rufnummernplan, eine Rufnummernidentifikation, einen automatischen Rückruf bei besetzt, einen automatischen Rückruf bei keiner Antwort, eine Rufsperre, eine Indikation von wartenden Nachrichten und/oder eine Anrufweiterleitung. Dadurch wird erreicht, dass dem Teilnehmer mindestens ein Dienst- und/oder Leistungsmerkmal zur Verfügung gestellt wird, das er mit Hilfe der herkömmlichen Teilnehmersignalisierung des paketvermittelnden Kommunikationsnetzes nicht nutzen kann. Mit Hilfe der ersten Signalisierungsinformationen können dem ersten Teilnehmer sämtliche Dienste und Leistungsmerkmale zur Verfügung gestellt werden, die das Netzelement unterstützt. Durch die Nutzungsmöglichkeit solcher bekannten Dienste und Leistungsmerkmale hat der erste Teilnehmer einen hohen Kommunikationskomfort sowie eine hohe Kommunikationsqualität.

Die ersten Signalisierungsinformationen werden bei einer anderen Ausführung der Erfindung mit Hilfe des paketvermittelnden Kommunikationsnetzes zwischen dem ersten Teilnehmer und einem zweiten Teilnehmer nach dem Tunnelprinzip übertragen, bei dem die ersten Signalisierungsinformationen auch direkt zwischen zwei Teilnehmern des paketvermittelnden Kommunikationsnetzes ausgetauscht werden. Dadurch stehen diesen Teilnehmern des paketvermittelnden Kommunikationsnetzes für eine Verbindung oder Signalisierung zwischen den beiden Teilnehmern zusätzliche Dienste und Leistungsmerkmale zur Verfügung. Somit muss die Teilnehmersignalisierung nicht ausschließlich über das Netzelement erfolgen.

Bei einer Verbindung zwischen dem ersten Teilnehmer und einem zweiten Teilnehmer werden die Nutzdaten mit Hilfe des Netzelementes übertragen, d.h. die Nutzdaten werden über das Netzelement geführt. Dadurch wird erreicht, dass das Netzelement Funktionen für Dienste und Leistungsmerkmale bereitstellen kann, die auch die Nutzdaten betreffen. Weiterhin wird dadurch erreicht, dass das Netzelement die Qualität der Verbindung zwischen dem ersten und zweiten Teilnehmer überwachen kann. So können z.B. Töne oder Ansagen zu den Teilnehmern übertragen werden. Dies ist z.B. bei Konferenzschaltungen zwischen mehreren Teilnehmern sinnvoll, da diesen Teilnehmern dann Hinweis- und Warteansagen übermittelt werden können, bevor die Konferenzschaltung geschaltet wird. Durch das Überwachen der Qualität der Nutzdatenübertragung durch das Netzelement kann weiterhin die Verbindung zwischen den Teilnehmern beim Unterschreiten von Mindestanforderungen, z.B. in Folge einer Überlastung des Paketnetzes oder des Teilnehmeranschlusses, unterbrochen werden. Der erste Teilnehmer kann durch das Führen der Nutzverbindung über das Netzelement auch eine Verbindung zu Teilnehmern eines mit dem Netzelement verbundenen leitungsvermittelnden Kommunikationsnetzes aufbauen.

Bei einer anderen vorteilhaften Weiterbildung werden die Nutzdaten zwischen dem ersten Teilnehmer und einem zweiten Teilnehmer des paketvermittelnden Kommunikationsnetzes mit Hilfe des paketvermittelnden Kommunikationsnetzes direkt zwischen den Teilnehmern übertragen. Dadurch werden die zwischen dem Netzelement und den Teilnehmern zu übertragenden Daten auf die Daten zur Übertragung der Signalisierungsinformationen beschränkt. Mit Hilfe des Netzelementes können so wesentlich mehr Verbindungen zwischen Teilnehmern aufgebaut bzw. gesteuert werden, da die Anzahl der gleichzeitig aufbaubaren Verbindungen nicht mehr vom Nutzdatenaufkommen und von den zur Verfügung stehenden Anschlussleitungen des Netzelementes abhängig ist. Dient das Netzelement ausschließlich zur Teilnehmersignalisierung von Teilnehmern eines paketvermittelnden Kommunikationsnetzes, so kann auf Baueinheiten zur Umwandlung der Nutzdaten des paketvermittelnden Kommunikationsnetzes in Nutzdaten des leitungsvermittelnden Kommunikationsnetzes, auf die sogenannten Mediagateways, verzichtet werden.

Der erste Teilnehmer kann in dem Netzelement die Funktionen eines Hauptanschlusses oder eines Nebenanschlusses übernehmen. Somit kann er wie konventionelle Teilnehmer leitungsvermittelnder Kommunikationsnetze durch das Netzelement verwaltet werden. So sind diesem Teilnehmer z.B. in der Datenbasis des Netzelementes übliche Dienst- und Leistungsmerkmale zuordenbar. Der Teilnehmer kann somit als Teilnehmer mit einem ISDN-Basisanschluss oder mit einem Breitband-ISDN-Anschluss im Netzelement verwaltet werden. Auch kann der ISDN-Anschluss ein ISDN-Anschluss in Punkt-zu-Punkt-Konfiguration oder ein ISDN-Anschluss in Punkt-zu-Mehrpunkt-Konfiguration sein. Dadurch wird erreicht, dass auch zur Teilnehmersignalisierung von Teilnehmern paketvermittelnder Kommunikationsnetze die Möglichkeit gegeben ist, dem Teilnehmeranschluss in einer Datenbasis des Netzelementes verschiedene Konfigurationsvarianten zuzuordnen.

Vorteilhaft ist es auch, wenn das paketvermittelnde Kommunikationsnetz ein auf einem Internetprotokoll basierendes Datennetz ist und wenn der Teilnehmer ein IP-Terminal ist. Durch die große Verbreitung von auf einem Internetprotokoll basierenden Netzen, wie z.B. dem Internet oder Local Area Networks (LAN) ist es mit Hilfe des Netzelementes möglich, die Teilnehmersignalisierung für viele auch weit entfernt angeordnete Teilnehmer durchzuführen. Mit Hilfe eines solchen Telekommunikationssystems ist es auch möglich, einem Teilnehmer gleichzeitig Daten und Sprachdienste im gesamten paketvermittelnden Kommunikationsnetz zur Verfügung zu stellen. Der Teilnehmer des auf dem Internetprotokoll basierenden Kommunikationsnetzes ist dabei ein IP-Terminal, das auch die ersten Signalisierungsinformationen verarbeitet.

Durch ein Verfahren mit den Merkmalen des Anspruchs 19 wird erreicht, dass dem ersten Teilnehmer des paketvermittelnden Kommunikationsnetzes mit Hilfe des Netzelementes eines leitungsvermittelnden Kommunikationsnetzes Dienst- und/oder Leistungsmerkmale bereitgestellt werden, die im leitungsvermittelnden Kommunikationsnetz üblich sind, jedoch durch herkömmliche paketvermittelnde Kommunikationsnetze nicht unterstützt werden.

Weitere Merkmale und Vorteile der Erfindung ergeben sich aus der folgenden Beschreibung, welche in Verbindung mit den beigefügten Zeichnungen die Erfindung an Hand von Ausführungsbeispielen erläutert. Darin zeigen:
- Figur 1: in einem Blockschaltbild die Signalisierung eines Verbindungsaufbaus zwischen einem ersten und einem zweiten Teilnehmer mit Hilfe einer Vermittlungsstelle,
- Figur 2: die Signalisierung zum Durchführen eines Leistungsmerkmals "Halten" durch den Teilnehmer B bei einer aktiven Verbindung zwischen dem Teilnehmer A und dem Teilnehmer B als Blockschaltbild,
- Figur 3: die Signalisierung eines Rufaufbaus des Teilnehmers B zu einem weiteren Teilnehmer C in einem Blockschaltbild,
- Figur 4: ein Blockschaltbild, bei dem die Signalisierung des Leistungsmerkmals "Rufweitergabe" dargestellt ist, wobei der Teilnehmer B den Ruf zu Teilnehmer C an Teilnehmer A weitergibt, und
- Figur 5: den Austausch von Signalisierungsinformationen zum Leistungsmerkmal "Namensanzeige" mit Hilfe eines Blockschaltbildes.

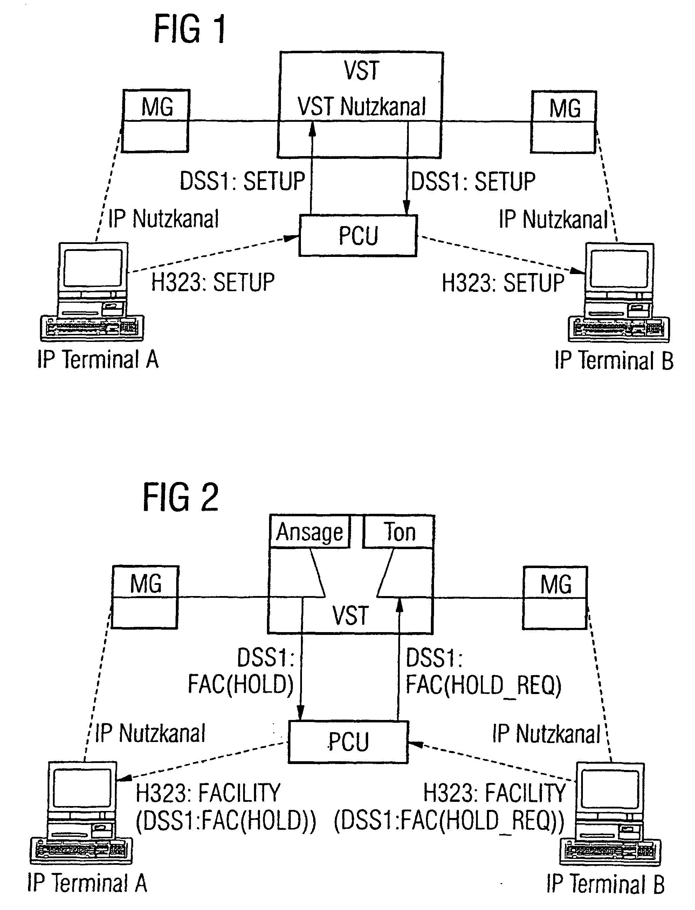

In Figur 1 ist ein Telekommunikationssystem 10 mit einer Vermittlungsstelle 12, einer Paketsteuereinheit 14, einem Mediagateway 16, einem Mediagateway 18, einem ersten Teilnehmer 20 und einem zweiten Teilnehmer 22 dargestellt. Die Mediagateways 16, 18 dienen als Schnittstellen für Nutzdaten zwischen einem leitungsvermittelnden Kommunikationsnetz 24 und einem paketvermittelnden Kommunikationsnetz 26. Das paketvermittelnde Kommunikationsnetz ist ein auf einem Internetprotokoll basierendes Datennetz, z.B. das Internet, und wird als IP-Netz bezeichnet. Zur Teilnehmersignalisierung in dem IP-Netz 26 wird der H.323/H.450-Signalisierungsstandard genutzt. Die Vermittlungsstelle 12 nutzt zur Teilnehmersignalisierung das DDS1-Signalisierungsprotokoll.

Die Paketsteuereinheit 14 dient als Schnittstelle für Signalisierungsinformationen zwischen dem leitungsvermittelnden Kommunikationsnetz 24 und dem IP-Netz 26. Die Paketsteuereinheit 14 konvertiert die Signalisierungsinformationen des leitungsvermittelnden Kommunikationsnetzes 24 in Signalisierungsinformationen des IP-Netzes 26 und umgekehrt. Der erste Teilnehmer 20 mit dem IP-Terminal A baut einen Ruf zu dem Teilnehmer 22 mit dem IP-Terminal B auf. Dazu erzeugt der erste Teilnehmer 20 eine erste H.323-Setup-Nachricht S1, die der Paketsteuereinheit 14 mit Hilfe des Signalisierungssystems des IP-Netzes 26 zugeführt wird. Die Paketsteuereinheit 14 wandelt die erste H.323-Setup-Nachricht S1 in eine erste DSS1-Setup-Nachricht S2 und führt diese einem nicht dargestellten Nachrichtenverteilsystem der Vermittlungsstelle 12 zu. Die Vermittlungsstelle 12 dient als Netzelement des leitungsvermittelnden Kommunikationsnetzes 24.

Die Vermittlungsstelle 12 verarbeitet die erste DSS1-Setup-Nachricht S2 und erzeugt eine zweite DSS1-Setup-Nachricht S3, die sie der Paketsteuereinheit 14 zur Weiterleitung an den zweiten Teilnehmer 22 übergibt. Die Paketsteuereinheit 14 wandelt die zweite DSS1-Setup-Nachricht S3 in eine zweite H.323-Setup-Nachricht S4, die mit Hilfe des IP-Netzes 26 zu dem Teilnehmer 22 mit dem IP-Terminal B übertragen wird. Mit dieser zweiten H.323-Setup-Nachricht S4 wird dem zweiten Teilnehmer 22 der Verbindungswunsch des ersten Teilnehmers 20 mitgeteilt.

Nimmt der zweite Teilnehmer 22 den Ruf an, so schaltet die Vermittlungsstelle 12 eine Nutzdatenverbindung zwischen dem ersten Teilnehmer 20 und dem zweiten Teilnehmer 22. Die Nutzdatenübertragung erfolgt zwischen dem IP-Netz 26 und der Vermittlungsstelle 12 mit Hilfe des Mediagateways 16 und des Mediagateways 18. Mit Hilfe dieser Nutzdatenverbindungen können die Teilnehmer 20 und 22 z.B. Sprachdaten austauschen. Somit erfolgt ein Verbindungsaufbau zwischen dem ersten Teilnehmer 20 und dem zweiten Teilnehmer 22 mit Hilfe der Vermittlungsstelle 12 wie zwischen zwei konventionellen Teilnehmern, die direkt an die Vermittlungsstelle 12 angeschlossen sind. Das Umsetzen der Signalisierungsinformationen von H.323-Signalisierungsinformationen zu DSS1-Signalisierungsinformationen und umgekehrt sowie die Wandlung der Nutzdaten mit Hilfe der Mediagateways 16, 18 beeinflusst die Art und Weise und die Qualität des Verbindungsaufbaus gegenüber dem Verbindungsaufbau zwischen zwei an die Vermittlungsstelle angeschlossenen konventionellen Teilnehmern nicht.

In Figur 2 ist der erste Teilnehmer 20 ebenfalls mit dem zweiten Teilnehmer 22 mit Hilfe der aus Figur 1 bekannten Anordnung verbunden. Gleiche Elemente haben gleiche Bezugszeichen. Während einer mit Hilfe der Vermittlungsstelle 12 geschalteten Nutzdatenverbindung zwischen dem ersten Teilnehmer 20 und dem zweiten Teilnehmer 22 nutzt der zweite Teilnehmer 22 das Leistungsmerkmal "Halten", um die Verbindung zum ersten Teilnehmer 20 zu unterbrechen und die Verbindung zum ersten Teilnehmer 20 zu "parken". Der zweite Teilnehmer 22 erzeugt die zum Aktivieren des Leistungsmerkmals "Halten" notwendigen Signalisierungsnachricht gemäß des DSS1-Signalisierungsprotokolls. Diese Signalisierungsnachricht wird vom Teilnehmer 22 in einen freien Datenbereich eines Signalisierungspaketes des IP-Netzes 26 eingefügt und zur Paketsteuereinheit 14 mit Hilfe des Signalisierungsdatenpaketes S5 übertragen. Der Datenbereich innerhalb des Signalisierungsdatenpaketes wird auch als Container bezeichnet. Die Paketsteuereinheit 14 entnimmt dem Signalisierungsdatenpaket die DSS1-Signalisierungsinformationen S6 und übergibt sie der Vermittlungsstelle 12. Daraufhin trennt die Vermittlungsstelle 12 die Nutzdatenverbindung zwischen dem ersten und dem zweiten Teilnehmer 20, 22. Weiterhin erzeugt die Vermittlungsstelle 12 eine zweite DSS1-Signalisierungsnachricht "Halten" S7 zur Teilnehmersignalisierung des ersten Teilnehmers 20. Diese zweite DSS1-Signalisierungsnachricht "Halten" S7 dient dazu, den ersten Teilnehmer 20 darüber zu informieren, das der zweite Teilnehmer 22 die Verbindung unterbrochen hat. Die DSS1-Signalisierungsnachricht "Halten" S7 wird von der Paketsteuereinheit 14 in einen freien Datenbereich eines Signalisierungspaketes des IP-Netzes 26 eingefügt und als Signalisierungspaket S8 zum ersten Teilnehmer 20 übertragen. Der erste Teilnehmer 20 entnimmt dem Signalisierungspaket S8 die DSS1-Signalisierungsnachricht S7 und verarbeitet diese.

Die Vermittlungsstelle 12 überträgt mit Hilfe einer Ansageeinheit 28 zum ersten Teilnehmer 20 die Sprachdaten einer für das Leistungsmerkmal "Halten" voreingestellten Ansage, durch die der erste Teilnehmer 20 darüber informiert wird, dass die Verbindung von dem zweiten Teilnehmer 22 unterbrochen wurde und in Kürze fortgesetzt wird. Die Sprachdaten der Ansage werden vom Mediagateway 16 in Paketdaten des IP-Netzes 26 gewandelt und zum ersten Teilnehmer 20 übertragen. Die Vermittlungsstelle 12 überträgt mit Hilfe der Nutzdatenverbindung zwischen der Vermittlungsstelle 12 und dem zweiten Teilnehmer 22 einen von einer Tonerzeugungseinheit 30 erzeugten Ton, z.B. ein Freizeichen, an den zweiten Teilnehmer 22. Dieser Ton wird mit Hilfe des Mediagateways 18 in Paketdaten des IP-Netzes 26 gewandelt und zum zweiten Teilnehmer 22 übertragen.

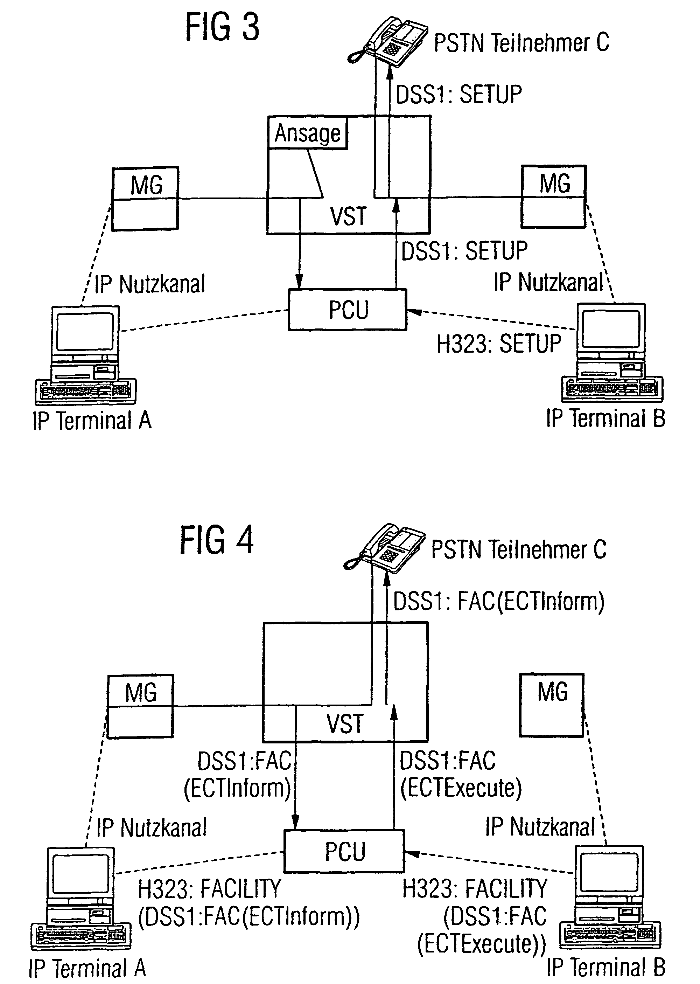

In Figur 3 ist die aus den Figuren 1 und 2 bekannte Anordnung und ein dritter Teilnehmer 32 dargestellt. Der dritte Teilnehmer 32 ist als konventioneller Teilnehmer des leitungsvermittelnden Kommunikationsnetzes 24 an die Vermittlungsstelle 12 angeschlossen. Nachdem der zweite Teilnehmer 22 die Verbindung zum ersten Teilnehmer 20 mit Hilfe der Haltefunktion unterbrochen hat, wird dem ersten Teilnehmer 20 weiterhin die Ansage als Sprachdaten übermittelt. Der zweite Teilnehmer 22 baut eine Verbindung zu dem dritten Teilnehmer 32 auf. Dazu erzeugt der zweite Teilnehmer 22 eine H.323-Setup-Signalisierungsnachricht S9, die mit Hilfe des Signalisierungssystems des IP-Netzes 26 zur Paketsteuereinheit 14 übertragen wird.

Die Paketsteuereinheit 14 wandelt die H.323-Setup-Signalisierungsnachricht S9 in eine DSS1-Setup-Signalisierungsnachricht S10. Aufgrund dieser DSS1-Setup-Signalisierungsnachricht S10 erzeugt die Vermittlungsstelle 12 eine zweite DSS1-Setup-Signalisierungsnachricht S11, die die Vermittlungsstelle 12 zu dem dritten Teilnehmer 32 überträgt. Mit Hilfe dieser Signalisierungsnachricht S11 wird dem dritten Teilnehmer 32 der Verbindungswunsch des zweiten Teilnehmers 22 angezeigt. Nimmt der Teilnehmer 32 den Ruf an, indem z.B. eine Bedienperson den Hörer des Telefons des dritten Teilnehmers 32 abhebt, so schaltet die Vermittlungsstelle 12 eine Nutzverbindung zwischen dem dritten Teilnehmer 32 und dem zweiten Teilnehmer 22. Mit Hilfe dieser Nutzdatenverbindung werden die Sprachdaten des dritten Teilnehmers 32 mit Hilfe der Vermittlungsstelle 12 zum Mediagateway 18 übertragen. Der Mediagateway 18 wandelt die Nutzdaten in Paketdaten des IP-Netzes 26 und überträgt sie zum zweiten Teilnehmer 22. Umgekehrt werden Sprachdaten vom zweiten Teilnehmer 22 mit Hilfe des IP-Netzes 26 zum Mediagateway 18 übertragen, das diese Daten in Sprachdaten des leitungsvermittelnden Kommunikationsnetzes 24 wandelt und über die geschaltete Verbindung der Vermittlungsstelle 12 zum Teilnehmer 32 überträgt.

In Figur 4 ist die Anordnung aus Figur 3 dargestellt, wobei Signalisierungsinformationen zur Rufweitergabe dargestellt sind. Wie in Figur 3 beschrieben, ist eine Nutzdatenverbindung zwischen dem zweiten Teilnehmer 22 und dem dritten Teilnehmer 32 aktiviert. Der zweite Teilnehmer 22 erzeugt eine DSS1-Signalisierungsnachricht S13 zur Rufweitergabe. Diese Signalisierungsnachricht S13 wird mit Hilfe eines Datenbereichs eines H.323-Signalisierungsdatenpaketes S12 zur Paketsteuereinheit 14 übertragen. Diese Übertragung erfolgt in gleicher Art und Weise wie in Figur 2 für die Haltenachricht beschrieben worden ist. Die Paketsteuereinheit 14 entnimmt aus dem Datenbereich die DSS1-Signalisierungsnachricht Rufweiterleitung S13 und überträgt sie zur Vermittlungsstelle 12. Die Vermittlungsstelle 12 erzeugt eine zweite DSS1-Signalisierungsnachricht S14 Rufweiterleitung-Information und überträgt diese zur Paketsteuereinheit 14. Die Paketsteuereinheit 14 führt diese zweite Signalisierungsnachricht S14 in einen freien Datenbereich eines H.323/Signalisierungspaketes S15.

Das H.323-Signalisierungspaket S15 wird von der Paketsteuereinheit 14 zum ersten Teilnehmer 20 mit Hilfe des IP-Netzes 26 übertragen. Der erste Teilnehmer 20 wird somit über die Rufweiterleitung informiert. Anschließend trennt die Vermittlungsstelle 12 die Verbindung zwischen dem zweiten Teilnehmer 22 und dem dritten Teilnehmer 32 sowie die Verbindung zwischen dem ersten Teilnehmer 20 und der Ansageeinheit 28 der Vermittlungsstelle 12 auf und schaltet eine Verbindung zwischen dem ersten Teilnehmer 20 und dem dritten Teilnehmer 32 durch. Die Nutzdaten, z.B. die Sprachdaten, des dritten Teilnehmers 32 werden mit Hilfe der Vermittlungsstelle 12 zum Mediagateway 16 übertragen, der diese Sprachdaten dann in Paketdaten des IP-Netzes 26 wandelt und zum ersten Teilnehmer 20 überträgt. In umgekehrter Weise werden die Sprachdaten des Teilnehmers 20 mit Hilfe des IP-Netzes 26 zum Mediagateway 16 übertragen. Das Mediagateway 16 wandelt diese Sprachdaten in Sprachdaten des leitungsvermittelnden Kommunikationsnetzes 24 um und überträgt diese über die durch die Vermittlungsstelle 12 geschaltete Verbindung zum dritten Teilnehmer 32.

Beim Gegenstand nach den Figuren 1 bis 4 wird eine komplette Rufweitergabe realisiert, die ein wichtiges Leistungsmerkmal ist. Beim Stand der Technik ist bisher nicht bekannt, dass einem Teilnehmer 20, 22 eines IP-Netzes 26 ein solches Leistungsmerkmal zur Verfügung steht. Mit Hilfe der in den Figuren 1 bis 4 gezeigten Anordnung ist es sogar möglich, diese Rufweiterleitung zu einem Teilnehmer 32 eines leitungsvermittelnden Kommunikationsnetzes durchzuführen, indem DSS1-Signalisierungsnachrichten durch die Teilnehmer 20, 22 zur Rufweiterleitung erzeugt und mit Hilfe des IP-Netzes 26 übertragen werden. Der Verbindungsaufbau erfolgt mit Hilfe von H.323-Setup-Signalisierungsnachrichten S1, S4. Jedoch sind beim Stand der Technik in paketvermittelnden Kommunikationsnetzen keine Signalisierungsnachrichten bekannt, mit deren Hilfe alle Dienste und Leistungsmerkmale des leitungsvermittelnden Kommunikationsnetzes nutzbar sind, zu denen keine äquivalenten Dienste und Leistungsmerkmale im IP-Netz 26 existieren. Bei der Erfindung werden die DSS1-Signalisierungsnachrichten des leitungsvermittelnden Kommunikationsnetzes 24, die nicht in H.323/H.450-Signalisierungsinformationen des IP-Netzes 26 umgesetzt werden können, als Daten in einem freien Datenbereich der in dem IP-Netz 26 verwendeten Signalisierungsdatenpakete übertragen. Die DSS1-Signalisierungsnachrichten können aber auch in separaten Datenpaketen zwischen der Paketsteuereinheit 14 und dem jeweiligen Teilnehmer 20, 22 übertragen werden.

Bei dem in den Figuren 1 bis 4 gezeigten Ausführungsbeispiel ist es auch möglich, die Nutzdaten zumindest bei der in Figur 1 dargestellten Verbindung zwischen dem ersten Teilnehmer 20 und dem zweiten Teilnehmer 22 nicht zwangsweise über die Vermittlungsstelle 12 zu führen, sondern den Nutzdatenaustausch direkt mit Hilfe des IP-Netzes 26 durchzuführen. Um jedoch eine Verbindung zu dem dritten Teilnehmer 32 aufbauen zu können, müssen zumindest die Nutzdaten für die Verbindung zwischen dem dritten Teilnehmer 32 und dem zweiten Teilnehmer 22 sowie zwischen dem dritten Teilnehmer 32 und dem ersten Teilnehmer 20 über die Vermittlungsstelle 12 geführt werden.

Soll jedoch eine Rufumleitung zu einem weiteren nicht dargestellten Teilnehmer des IP-Netzes 26 realisiert werden, so kann auch ganz auf eine Nutzdatenübertragung über die Vermittlungsstelle 12 sowie auf die Mediagateways 16, 18 verzichtet werden. In diesem Fall ist es dann jedoch nötig, dass ein Netzelement des IP-Netzes 26 die Funktion der Ansageeinheit 28 und der Toneinheit 30 übernimmt. So besteht z.B. die Möglichkeit, eine Ansageeinheit und eine Tonerzeugungseinheit in dem IP-Terminal A des Teilnehmers 20 und in dem IP-Terminal B des Teilnehmers 22 zu installieren. Mit Hilfe der empfangenen Signalisierungsinformationen können dann entsprechende Töne und Ansagen generiert bzw. abgespielt werden. Weiterhin kann auch auf eine Ansage und auf die Töne verzichtet werden, da sie zur Realisierung des Leistungsmerkmals nicht unbedingt erforderlich sind.

Nachdem der zweite Teilnehmer 22 in Figur 2 mit Hilfe von Signalisierungsinformationen S6 das Leistungsmerkmal "Halten" aktiviert hat und die Vermittlungsstelle 12 eine entsprechende Signalisierungsinformation S7 für den ersten Teilnehmer 20 erzeugt und zur Paketsteuereinheit 14 übertragen hat, erzeugt sie ebenfalls gemäß dem DSS1-Signalisierungsprotokoll eine Bestätigungsnachricht, die der Paketsteuereinheit 14 zugeführt wird. Diese Bestätigungsnachricht kann dann ebenfalls als DSS1-Signalisierungsinformation in einem Datenbereich eines Signalisierungsdatenpaketes von der Paketsteuereinheit 14 zum Teilnehmer B übertragen werden. Jedoch sind auch Ausführungsformen denkbar, bei denen eine solche Rückmeldung aus Performancegründen nicht durchgeführt wird, wobei eine solche Rückmeldung in dem IP-Terminal des zweiten Teilnehmers 22 generiert wird bzw. die Fehlermeldung beim Ausbleiben einer solchen Bestätigungsnachricht unterdrückt wird. Auf gleiche Weise kann mit Signalisierungsinformationen verfahren werden, die nicht für die Funktion des Dienstes oder des Leistungsmerkmals zwingend erforderlich sind.

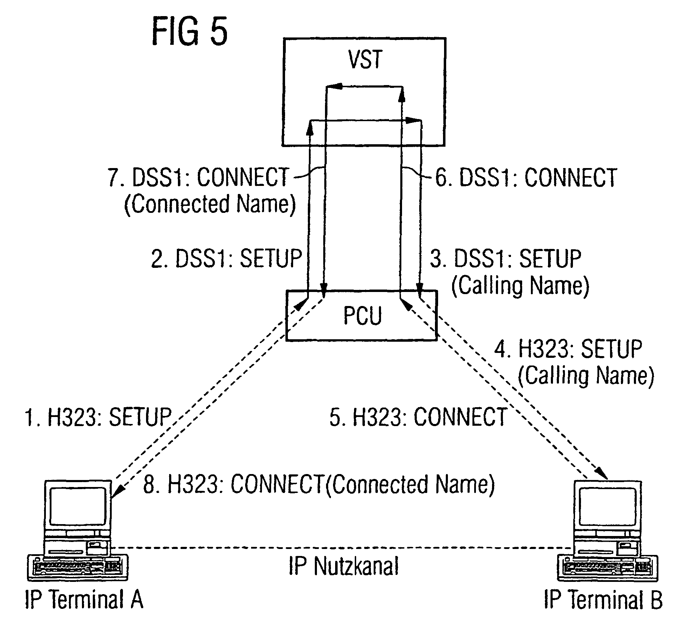

In Figur 5 ist ein zweites Ausführungsbeispiel dargestellt, bei dem die Vermittlungsstelle 12 eine Teilnehmersignalisierung des ersten Teilnehmers 20 und des zweiten Teilnehmers 22 mit Hilfe der Paketsteuereinheit 14 durchführt. Bei diesem Ausführungsbeispiel werden die Nutzdaten mit Hilfe des IP-Netzes 26 direkt zwischen dem ersten Teilnehmer 20 und dem Teilnehmer 22 übertragen. Bei einem Verbindungswunsch des ersten Teilnehmers 20 zu dem zweiten Teilnehmer 22 erzeugt der erste Teilnehmer 20 eine H.323-Setup-Signalisierungsnachricht S15. Diese H.323-Setup-Signalisierungsnachricht S15 wird mit Hilfe des IP-Netzes 26 zur Paketsteuereinheit 14 übertragen. Die Paketsteuereinheit 14 konvertiert die H.323-Setup-Signalisierungsnachricht S15 in eine DSS1-Setup-Signalisierungsnachricht S16 und überträgt sie zur Vermittlungsstelle 12.

Der erste Teilnehmer 20 und der zweite Teilnehmer 22 bilden mit weiteren nicht dargestellten Teilnehmern eine sogenannte CENTREX-Gruppe. Die Funktionsweise und die Bedeutung einer solchen CENTREX-Gruppe wurde bereits in der Beschreibungseinleitung erläutert. In der Datenbasis der Vermittlungsstelle 12 ist die Zugehörigkeit des ersten und des zweiten Teilnehmers 20, 22 sowie deren Berechtigungen innerhalb der CENTREX-Gruppe gespeichert. Mit Hilfe dieser Berechtigungen kann das Nutzen von Diensten und Leistungsmerkmalen für einzelne Teilnehmer 20, 22 beschränkt oder verhindert werden. Sowohl für den ersten Teilnehmer 20 als auch für den zweiten Teilnehmer 22 ist in der Datenbasis der Vermittlungsstelle 12 vermerkt, dass sie das Leistungsmerkmal "Namensanzeige" unterstützen. Der anzuzeigende Name des ersten Teilnehmers 20 sowie des zweiten Teilnehmers 22 sind in der Vermittlungsstelle 12 gespeichert.

Die Vermittlungsstelle 12 verarbeitet die DDS1-Setup-Signalisierungsnachricht S16 des ersten Teilnehmers 20 und erzeugt eine zweite DSS1-Setup-Signalisierungsnachricht S17, die neben Signalisierungsinformationen zum Verbindungsaufbau auch den Namen des rufenden ersten Teilnehmers 20 enthält. Diese zweite DSS1-Setup-Signalisierungsnachricht S17 wird von der Vermittlungsstelle 12 zur Paketsteuereinheit 14 übertragen. Die Paketsteuereinheit 14 konvertiert die zweite DSS1-Setup-Signalisierungsnachricht S17 in eine H.323-Setup-Signalisierungsnachricht S18. Eine Übertragung des Namens des rufenden Teilnehmers wird jedoch von dem H.323-Signalisierungsstandard nicht unterstützt. Die DSS1-Signalisierungsinformationen zum Übertragen des Namens werden zusammen mit dem Namen in einem Datenbereich des Signalisierungsdatenpaketes gespeichert, das zum Übertragen der H.323-Setup-Signalisierungsnachricht S18 zum zweiten Teilnehmer 22 genutzt wird. Die DSS1-Signalisierungsinformationen zum Übertragen des Namens und der Name werden so als reine Daten von der Paketsteuereinheit 14 zum zweiten Teilnehmer 22 mit Hilfe des IP-Netzes 26 übertragen.

Sowohl die H.323-Setup-Signalisierungsnachricht S18 als auch die Daten mit der DSS1-Signalisierungsinformation zur Namensübertragung und der Name werden von dem IP-Terminal B des zweiten Teilnehmers 22 verarbeitet. Der Name des rufenden Teilnehmers 20 wird daraufhin auf einer Anzeigeeinheit des IP-Terminals B des zweiten Teilnehmers 22 angezeigt. Der zweite Teilnehmer 22 übermittelt eine H.323-Connect-Signalisierungsnachricht S19 zur Paketsteuereinheit 14. Die Paketsteuereinheit 14 wandelt diese H.323-Connect-Signalisierungsnachricht S19 in eine DSS1-Connect-Signalisierungsnachricht S20 um und überträgt sie zur Vermittlungsstelle 12. Die Vermittlungsstelle 12 verarbeitet diese DSS1-Connect-Signalisierungsnachricht S20 und erzeugt eine zweite DSS1-Connect-Signalisierungsnachricht S21, die den Namen des zweiten Teilnehmers 22 enthält. Diese zweite DSS1-Connect-Signalisierungsnachricht S21 wird von der Vermittlungsstelle 12 zur Paketsteuereinheit 14 übertragen. Die Paketsteuereinheit 14 wandelt die DSS1-Connect-Signalisierungsnachricht S21 in eine H.323-Connect-Signalisierungsnachricht S22.

Die DSS1-Signalisierungsinformation zur Übertragung des Namens des zweiten Teilnehmers 22 wird jedoch wie bereits erwähnt von dem H.323-Standard nicht unterstützt. Die Paketsteuereinheit 14 speichert die DSS1-Signalisierungsinformation zum Übertragen des Namens und den Namen in dem Signalisierungsdatenpaket, mit dessen Hilfe die H.323-Connect-Signalisierungsnachricht S22 von der Paketsteuereinheit 14 zum ersten Teilnehmer 20 übertragen wird. Das IP-Terminal A des ersten Teilnehmers 20 verarbeitet sowohl die H.323-Connect-Signalisierungsnachricht S22 als auch die DSS1-Signalisierungsinformation zum Anzeigen des Namens und den Namen. Somit wird auch der Name des zweiten Teilnehmers 22 auf einer Anzeigeeinheit des IP-Terminals A des ersten Teilnehmers 20 angezeigt. Die Signalisierungsinformationen, die zum Steuern und Bereitstellen von Diensten und Leistungsmerkmalen dienen, die nicht vom IP-Netz 26 unterstützt werden, werden von den Teilnehmern 20, 22 sowie von der Vermittlungsstelle 12 als DSS1-Signalisierungsinformationen erzeugt und verarbeitet. Auf diese Weise lassen sich alle bekannten Dienste und Leistungsmerkmale von Fernsprechnetzen 24 auch Teilnehmern 20, 22 von paketvermittelnden Kommunikationsnetzen 26 zur Verfügung stellen.

Die Vermittlungsstelle 12 überprüft für den Verbindungsaufbau zwischen dem ersten Teilnehmer 20 und dem zweiten Teilnehmer 22 weiterhin, ob eine Berechtigung des rufenden ersten Teilnehmers 20 und des gerufenen zweiten Teilnehmers 22 vorliegt, Nutzdaten über die Vermittlungsstelle 12 zu führen und somit Ressourcen zum Schalten der Verbindung in der Vermittlungsstelle 12 in Anspruch zu nehmen. Weiterhin wird überprüft, ob beim Vorliegen einer solchen Berechtigung die technische Möglichkeit gegeben ist, z.B. ob die Vermittlungsstelle 12 mit Hilfe eines Mediagateways 16 und eines Mediagateways 18 mit dem IP-Netz 26 verbunden ist. Im vorliegenden zweiten Ausführungsbeispiel besitzt weder der erste Teilnehmer 20 noch der zweite Teilnehmer 22 eine Berechtigung, Nutzdaten über die Vermittlungsstelle 12 zu führen. Weiterhin besteht nicht die technische Möglichkeit, Sprachdaten vom ersten Teilnehmer 20 oder vom zweiten Teilnehmer 22 zur Vermittlungsstelle 12 zu übertragen, da bei der Anordnung in Figur 5 keine Mediagateways vorhanden sind. Die Nutzdaten müssen somit zwingend mit Hilfe des IP-Netzes 26 übertragen werden. Dies ist in Figur 5 durch den IP-Nutzkanal zwischen dem ersten Teilnehmer 20 und dem zweiten Teilnehmer 22 angedeutet. Bei einer Sprachverbindung zwischen dem ersten Teilnehmer 20 und dem zweiten Teilnehmer 22 werden mit diesem Nutzkanal die Sprachdaten übertragen. Die Signalisierungsdaten werden aber weiterhin zwingend über die Vermittlungsstelle 12 geführt.

Bei anderen Ausführungsbeispielen ist es auch denkbar, dass ein Teil der Signalisierungsdaten direkt zwischen dem ersten Teilnehmer 20 und dem zweiten Teilnehmer 22 ausgetauscht werden. Diese Signalisierungsdaten können z.B. DSS1-Signalisierungsinformationen zur Namensanzeige sein, die direkt mit Hilfe von Datenpaketen als Nutzdaten zwischen dem ersten und dem zweiten Teilnehmer 20, 22 ausgetauscht werden. Somit werden Signalisierungsinformationen für Dienste und Leistungsmerkmale, die nicht von einem Signalisierungsstandard des IP-Netzes 26 unterstützt werden, direkt zwischen den Teilnehmern 20, 22 ausgetauscht. Die Verbindungssteuerung wird aber auch in diesem Fall durch die Vermittlungsstelle 12 oder von einer Vermittlungsinstanz des paketvermittelnden Kommunikationsnetzes, z.B. von einem Gatekeeper, durchgeführt.

## Patentansprüche

1. Telekommunikations-System
- mit einer Schnittstelleneinheit,
- mit einem paketvermittelnden Kommunikationsnetz,
- mit einem leitungsvermittelnden Kommunikationsnetz,
- mit mindestens einem erster Teilnehmer, der mit dem paketvermittelnden Kommunikationsnetz verbunden ist,
- mit einem Netzelement des leitungsvermittelnden Kommunikationsnetzes, das mit Hilfe der Schnittstelleneinheit mit dem paketvermittelnden Kommunikationsnetz verbunden ist,
- mit ersten Signalisierungsinformationen, die in dem leitungsvermittelnden Kommunikationsnetz gemäß einem Signalisierungsstandard des leitungsvermittelnden Kommunikationsnetzes ausgebildet sind,
**dadurch gekennzeichnet,**
**dass** zumindest ein Teil der ersten Signalisierungsinformationen so zwischen dem Netzelement und dem ersten Teilnehmer übertragen wird, dass dieser Teil auch in dem paketvermittelnden Kommunikationsnetz nach dem Signalisierungsstandard des leitungsvermittelnden Kommunikationsnetzes ausgebildet ist.

2. System nach dem vorhergehenden Anspruch,
bei dem die ersten Signalisierungsinformationen gemäß einem DSS1 Signalisierungsprotokoll ausgebildet sind.

3. System nach einem der vorhergehenden Ansprüche,
bei dem ein Teil der ersten Signalisierungsinformationen mit Hilfe der Schnittstelleneinheit in zweite Signalisierungsinformationen konvertiert und als zweite Signalisierungsinformationen zwischen der Schnittstelleneinheit und dem ersten Teilnehmer übertragen werden.

4. System nach Anspruch 3,
bei dem die zweiten Signalisierungsinformationen gemäß einem H.323/H.450 Signalisierungsprotokoll ausgebildet sind.

5. System nach Anspruch 3,
bei dem die zweiten Signalisierungsinformationen gemäß einem SIP Signalisierungsprotokoll ausgebildet sind.

6. System nach einem der drei vorhergehenden Ansprüche,
bei dem die zweiten Signalisierungsinformationen mit Hilfe von Signalisierungspaketen des paketvermittelnden Kommunikationsnetzes und die ersten Signalisierungsinformationen mit Hilfe eines Datenbereichs der Signalisierungspakete übertragen werden, der keine zweiten Signalisierungsinformationen enthält.

7. System nach einem der vorhergehenden Ansprüche,
bei dem mit Hilfe der ersten Signalisierungsinformationen dem ersten Teilnehmer mindestens ein Dienst- und/oder Leistungsmerkmal zur Nutzung bereitgestellt wird, das nicht mit Hilfe der zweiten Signalisierungsinformationen nutzbar ist.

8. System nach dem vorhergehenden Anspruch,
bei dem das Dienst- und/oder Leistungsmerkmal eine Rufübernahme, eine Rufumleitung, eine Rufweiterleitung, eine Rufnamenanzeige, eine Teilnehmeraufschaltung, ein teilnehmerabhängiges Läuten, eine Dreierkonferenz, eine große Konferenz, ein Halten, eine Anzeige von Gebühreninformationen, eine geschlossene Benutzergruppe, einem privaten Rufnummernplan, eine Rufnummernidentifikation, ein automatischer Rückruf bei besetzt, ein automatischer Rückruf bei keiner Antwort, eine Rufsperre, eine Indikation von wartenden Nachrichten und/oder eine Anrufweiterleitung umfasst.

9. System nach einem der vorhergehenden Ansprüche,
bei dem die ersten Signalisierungsinformationen mit Hilfe des paketvermittelnden Kommunikationsnetzes zwischen dem ersten Teilnehmer und mindestens einem zweiten Teilnehmer nach dem Tunnelprinzip übertragen werden.

10. System nach einem der vorhergehenden Ansprüche,
bei dem die Schnittstelleneinheit die Signalisierungsinformationen des Netzelements in zweite Signalisierungsinformationen konvertiert und umgekehrt, wobei die ersten Signalisierungsinformationen nur die Signalisierungsinformationen des leitungsvermittelnden Kommunikationsnetzes umfassen, die in zweite Signalisierungsinformationen konvertierbar sind.

11. System nach einem der vorhergehenden Ansprüche,
bei dem bei einer Verbindung zwischen dem ersten Teilnehmer und mindestens einem zweiten Teilnehmer die Nutzdaten mit Hilfe des Netzelementes übertragen werden.

12. System nach einem der Ansprüche 1 bis 10,
bei dem bei einer Verbindung zwischen dem ersten Teilnehmer und mindestens einem zweiten Teilnehmer des paketvermittelnden Kommunikationsnetzes die Nutzdaten mit Hilfe des paketvermittelnden Kommunikationsnetzes direkt zwischen den Teilnehmern übertragen werden.

13. System nach einem der vorhergehenden Ansprüche,
bei dem der erste Teilnehmer in dem Netzelement die Funktionen eines Hauptanschlusses oder eines Nebenstellenanschlusses übernimmt.

14. System nach einem der vorhergehenden Ansprüche,
bei dem im Netzelement dem ersten Teilnehmer eine Rufnummer zugeordnet ist, der erste Teilnehmer im paketvermittelnden Kommunikationsnetz eine Teilnehmeradresse hat und die Zuordnung zwischen der Teilnehmeradresse und der Rufnummer mit Hilfe einer Steuereinheit erfolgt.

15. System nach einem der vorhergehenden Ansprüche,
bei dem der erste Teilnehmer als Teilnehmer mit einem ISDN Basisanschluss oder mit einem Breitband-ISDN Anschluss im Netzelement verwaltet wird.

16. System nach dem vorhergehenden Anspruch,
bei dem der ISDN Anschluss ein ISDN Anschluss in Punkt zu Punkt Konfiguration oder ein ISDN Anschluss in Punkt zu Mehrpunkt Konfiguration ist.

17. System nach einem der vorhergehenden Ansprüche,
bei dem das paketvermittelnde Kommunikationsnetz ein auf einem Internetprotokoll basierendes Datennetz ist, und dass der erste Teilnehmer ein IP Terminal ist.

18. System nach einem der vorhergehenden Ansprüche,
bei dem der erste Teilnehmer eine Sprachverbindung zu einem zweiten Teilnehmer aufbaut.

19. Verfahren zum Betreiben eines Telekommunikationssystems
- mit einem paketvermittelnden Kommunikationsnetz,
- mit mindestens einem erster Teilnehmer, der mit dem paketvermittelnden Kommunikationsnetz verbunden ist,
- mit einem leitungsvermittelnden Kommunikationsnetz,
- mit einer Schnittstelleneinheit,
- mit einem Netzelement des leitungsvermittelnden Kommunikationsnetzes,
- mit ersten Signalisierungsinformationen, die in dem leitungsvermittelnden Kommunikationsnetz gemäß einem Signalisierungsstandard des leitungsvermittelnden Kommunikationsnetzes ausgebildet sind,
mit folgenden Schritten:
(a) das Netzelement wird mit Hilfe der Schnittstelleneinheit mit dem paketvermittelnden Kommunikationsnetz verbunden,
(b) zumindest ein Teil der ersten Signalisierungsinformationen wird so zwischen dem Netzelement und dem ersten Teilnehmer übertragen, dass dieser Teil auch in dem paketvermittelnden Kommunikationsnetz nach dem Signalisierungsstandard des leitungsvermittelnden Kommunikationsnetzes ausgebildet ist.

## Claims

1. Telecommunications system
- having an interface unit,
- having a packet-switching communications network,
- having a circuit-switching communications network,
- having at least a first subscriber which is connected to the packet-switching communications network,
- having a network element of the circuit-switching communications network which is connected to the packet-switching communications network using the interface unit,
- having first signalling information which is formed in the circuit-switching communications network in accordance with a signalling standard of the circuit-switching communications network,
**characterized**
**in that** at least a portion of the first signalling information is transmitted between the network element and the first subscriber such that this portion is also formed in the packet-switching communications network in accordance with the signalling standard of the circuit-switching communications network.

2. System according to the preceding claim, in which the first signalling information is formed in accordance with a DSS1 signalling protocol.

3. System according to one of the preceding claims, in which a portion of the first signalling information is converted into second signalling information using the interface unit and is transmitted as second signalling information between the interface unit and the first subscriber.

4. System according to Claim 3, in which the second signalling information is formed in accordance with an H.323/H.450 signalling protocol.

5. System according to Claim 3, in which the second signalling information is formed in accordance with a SIP signalling protocol.

6. System according to one of the three preceding claims, in which the second signalling information is transmitted using signalling packets of the packet-switching communications network, and the first signalling information is transmitted using a data area of the signalling packets which does not contain any second signalling information.

7. System according to one of the preceding claims, in which at least one service feature and/or feature which cannot be used by means of the second signalling information is made available for use to the first subscriber by means of the first signalling information.

8. System according to the preceding claim, in which the service feature and/or feature comprises call pick-up, call divert, call forwarding, call name display, subscriber cut-in, subscriber-dependent ringing, three-way conferencing, large-scale conferencing, holding, displaying of toll information, a closed user group, a private call number schedule, call number identification, automatic callback when busy, automatic callback when no reply, call barring, call waiting and/or call transfer.

9. System according to one of the preceding claims, in which the first signalling information is transmitted between the first subscriber and at least one second subscriber using the packet-switching communications network in accordance with the tunnel principle.

10. System according to one of the preceding claims, in which the interface unit converts the signalling information of the network element into second signalling information, and vice versa, first signalling information comprising only that signalling information of the circuit-switching communications network which can be converted into second signalling information.

11. System according to one of the preceding claims, in which the user data is transmitted using the network element when there is a connection between the first subscriber and at least one second subscriber.

12. System according to one of Claims 1 to 10, in which the user data is transmitted directly between the subscribers using the packet-switching communications network when there is a connection between the first subscriber and at least one second subscriber of the packet-switching communications network.

13. System according to one of the preceding claims, in which the first subscriber in the network element assumes the functions of a main line or of an extension.

14. System according to one of the preceding claims, in which a call number is assigned to the first subscriber in the network element, the first subscriber in the packet-switching communications network has a subscriber address, and the assignment between the subscriber address and the call number is made using a control unit.

15. System according to one of the preceding claims, in which the first subscriber is administered as a subscriber with an ISDN basic access or with a broadband ISDN access in the network element.

16. System according to the preceding claim, in which the ISDN access is an ISDN access in point-to-point configuration or an ISDN access in point-to-multipoint configuration.

17. System according to one of the preceding claims, in which the packet-switching communications network is a data network which is based on an Internet protocol, and the first subscriber is an IP terminal.

18. System according to one of the preceding claims, in which the first subscriber sets up a voice connection to a second subscriber.

19. Method for operating a telecommunications system
- having a packet-switching communications network,
- having at least a first subscriber which is connected to the packet-switching communications network,
- having a circuit-switching communications network,
- having an interface unit,
- having a network element of the circuit-switching communications network,
- having first signalling information which is formed in the circuit-switching communications network in accordance with a signalling standard of the circuit-switching communications network,
having the following steps:
a) the network element is connected to the packet-switching communications network using the interface unit,
b) at least a portion of the first signalling information is transmitted between the network element and the first subscriber such that this portion is also formed in the packet-switching communications network in accordance with the signalling standard of the circuit-switching communications network.

## Revendications

1. Système de télécommunication
- avec une unité d'interface,
- avec un réseau de communication à commutation de paquets,
- avec un réseau de communication à commutation de circuits,
- avec au moins un premier abonné qui est connecté au réseau de communication à commutation de paquets,
- avec un élément de réseau du réseau de communication à commutation de circuits, qui est connecté au réseau de communication à commutation de paquets à l'aide de l'unité d'interface,
- avec des premières informations de signalisation qui sont réalisées dans le réseau de communication à commutation de circuits selon un standard de signalisation du réseau de communication à commutation de circuits,
**caractérisé en ce que**
au moins une partie des premières informations de signalisation est transmise entre l'élément de réseau et le premier abonné de telle manière que cette partie soit réalisée aussi dans le réseau de communication à commutation de paquets selon le standard de signalisation du réseau de communication à commutation de circuits.

2. Système selon la revendication précédente,
dans lequel les premières informations de signalisation sont réalisées selon un protocole de signalisation DSS1.

3. Système selon l'une des revendications précédentes,
dans lequel une partie des premières informations de signalisation est convertie en deuxièmes informations de signalisation à l'aide de l'unité d'interface et transmise comme deuxièmes informations de signalisation entre l'unité d'interface et le premier abonné.

4. Système selon la revendication 3,
dans lequel les deuxièmes informations de signalisation sont réalisées selon un protocole de signalisation H.323/H.450.

5. Système selon la revendication 3,
dans lequel les deuxièmes informations de signalisation sont réalisées selon un protocole de signalisation SIP.

6. Système selon l'une des trois revendications précédentes,
dans lequel les deuxièmes informations de signalisation sont transmises à l'aide de paquets de signalisation du réseau de communication à commutation de paquets et les premières informations de signalisation à l'aide d'une zone de données des paquets de signalisation, qui ne contient pas de deuxièmes informations de signalisation.

7. Système selon l'une des revendications précédentes,
dans lequel, à l'aide des premières informations de signalisation, il est mis à disposition du premier abonné, pour utilisation, au moins un service et/ou un service complémentaire qui n'est pas utilisable à l'aide des deuxièmes informations de signalisation.

8. Système selon la revendication précédente,
dans lequel le service et/ou service complémentaire comprend une reprise d'appel, une déviation d'appel, un transfert d'appel, un affichage du nom de l'appelant, un ajout d'un abonné, une sonnerie en fonction de l'abonné, une conférence à trois, une grande conférence, une mise en attente, un affichage d'informations de coût, un groupe fermé d'utilisateurs, un répertoire privé, une identification des numéros d'appel, un rappel automatique en cas d'occupation, un rappel automatique en cas de non-réponse, un blocage d'appel, une indication de messages en attentes et/ou un acheminement d'appel.

9. Système selon l'une des revendications précédentes,
dans lequel les premières informations de signalisation sont transmises à l'aide du réseau de communication à commutation de paquets entre le premier abonné et au moins un deuxième abonné selon le principe du tunnel.

10. Système selon l'une des revendications précédentes,
dans lequel l'unité d'interface convertit les informations de signalisation de l'élément de réseau en deuxièmes informations de signalisation et vice versa, les premières informations de signalisation comprenant uniquement les informations de signalisation du réseau de communication à commutation de circuits, qui sont convertibles en deuxièmes informations de signalisation.

11. Système selon l'une des revendications précédentes,
dans lequel, en cas de connexion entre le premier abonné et au moins un deuxième abonné, les données utiles sont transmises à l'aide de l'élément de réseau.

12. Système selon l'une des revendications 1 à 10,
dans lequel, en cas de connexion entre le premier abonné et au moins un deuxième abonné du réseau de communication à commutation de paquets, les données utiles sont transmises directement entre les abonnés à l'aide du réseau de communication à commutation de paquets.

13. Système selon l'une des revendications précédentes,
dans lequel le premier abonné assume la fonction d'un poste principal ou d'un poste secondaire dans l'élément de réseau.

14. Système selon l'une des revendications précédentes,
dans lequel un numéro d'appel est attribué au premier abonné dans l'élément de réseau, le premier abonné a une adresse d'abonné dans le réseau de communication à commutation de paquets et l'attribution entre l'adresse d'abonné et le numéro d'appel est effectuée à l'aide d'une unité de commande.

15. Système selon l'une des revendications précédentes,
dans lequel le premier abonné est géré comme abonné avec un accès de base ISDN ou avec un accès ISDN à large bande dans l'élément de réseau.

16. Système selon la revendication précédente,
dans lequel l'accès ISDN est un accès ISDN en configuration point à point ou un accès ISDN en configuration point à multipoint.

17. Système selon l'une des revendications précédentes,
dans lequel le réseau de communication à commutation de paquets est un réseau de données basé sur un protocole Internet et le premier abonné est un terminal IP.

18. Système selon l'une des revendications précédentes,
dans lequel le premier abonné établit une communication vocale vers un deuxième abonné.

19. Procédé permettant de faire fonctionner un système de télécommunication
- avec un réseau de communication à commutation de paquets,
- avec au moins un premier abonné qui est connecté au réseau de communication à commutation de paquets,
- avec un réseau de communication à commutation de circuits,
- avec une unité d'interface,
- avec un élément de réseau du réseau de communication à commutation de circuits,
- avec des premières informations de signalisation qui sont réalisées dans le réseau de communication à commutation de circuits selon un standard de signalisation du réseau de communication à commutation de circuits,
comprenant les étapes suivantes :
(a) l'élément de réseau est connecté au réseau de communication à commutation de paquets à l'aide de l'unité d'interface,
(b) au moins une partie des premières informations de signalisation est transmise entre l'élément de réseau et le premier abonné de telle manière que cette partie soit réalisée aussi dans le réseau de communication à commutation de paquets selon le standard de signalisation du réseau de communication à commutation de circuits.
